# EUROPEAN PATENT SPECIFICATION

(11) **EP 1 562 414 B1**
(45) Date of publication and mention of the grant of the patent: **17.01.2007**
(21) Application number: 03776070.9
(22) Date of filing: 20.11.2003
(51) Int. Cl.: A01G 9/18

(54) **METHOD FOR REGULATING THE CO2 CONCENTRATION OF THE AIR WITHIN AN ENCLOSED SPACE WITHIN WHICH CROPS ARE GROWN**
VERFAHREN ZUR REGULIERUNG DER KOHLENDIOXIDKONZENTRATION DER LUFT IN EINEM ZUM PFLANZENWUCHS GEBRAUCHTEN GESCHLOSSENEN RAUM
PROCEDE PERMETTANT DE REGULER LA CONCENTRATION EN CO2 DE L'AIR DANS UN ESPACE CLOS DANS LEQUEL DES PLANTES SONT CULTIVEES

(30) Priority: 21.11.2002 NL 1021970
(43) Date of publication of application: 17.08.2005
(73) Proprietor: Nederlandse Organisatie voor Toegepast-Natuurwetenschappelijk Onderzoek TNO, 2628 VK Delft (NL)
(72) Inventor: APPELMAN, Willem, Anton, Jozef, NL-7312 ED Apeldoorn (NL)
(74) Representative: Winckels, Johannes Hubertus F.
(86) International application number: PCT/NL2003/000816
(87) International publication number: WO 2004/057945

(56) References cited:
- DE-A- 3 415 970
- GB-A- 2 181 364
- US-A- 5 713 154
- US-B1- 6 205 704

## Description

The invention relates to a method for regulating the air within an enclosed space within which crops are grown. An example of such a method is disclosed in US-5 713 154 A.

CO₂ is a necessary factor for growing crops, because in the presence of light, and while taking up CO₂, photosynthesis takes place within the crops, so that growth is effected. Conversely, in the dark, no photosynthesis takes place and oxygen is taken up by the crops and CO₂ is released. As the demand for grown crops increases and the space available therefor in the Netherlands is limited, growth stimulation of crops is of great importance in horticulture under glass. The growth of crops can for instance be stimulated by assimilation lighting and through increase of the CO₂ concentration in the space within which the respective crops are grown. The increase of the CO₂ concentration in particular is an important feature in crop growing. In most cases, the CO₂ used to this end is produced by the heating boiler effecting the heating of the greenhouse during the periods of time when there is a heat demand within the greenhouse. However, in many cases, the CO₂ is also produced with the heating boiler during periods of time when there is no heat demand in the greenhouse. In such cases, it is possible to capture the produced heat in so-called heat buffers for later use. Often, however, heat waste is involved. On the other hand, there are periods of time during which there is a heat demand within a greenhouse but no demand or a smaller demand for CO₂, for instance during the night or during the winter. The CO₂ produced then is directly emitted to the outside air in the form of flue gases. Therefore, not only waste of heat is often involved, but also unnecessary production and emission of CO₂. It will be clear that in view of the increasingly strict standards with regard to energy consumption and emission of CO₂, there is a great need for a more efficient use or a reduction of heat and CO₂ produced in the greenhouses.

Surprisingly, it has now been found that the emission of CO₂ can be strongly reduced and the heat can be used more efficiently when the CO₂ concentration within the enclosed space within which crops grow is regulated with the aid of a solid substance which adsorbs CO₂ and, at a later moment, releases it again, and, simultaneously, the regulation of the CO₂ concentration is coupled to a heat buffer regulating the temperature within the enclosed space.

The invention therefore relates to a method for regulating the CO₂ concentration of the air in an enclosed space within which crops are grown, wherein CO₂ released in a combustion process is stored on a solid substance and is released at a later moment in order to effect a desired CO₂ concentration within the space, and wherein the regulation of the CO₂ concentration is coupled to a heat buffer regulating the temperature within the enclosed space.

For completeness' sake, it is noted that in British patent publication 2181364 A, a method is described for regulating the air within a storage space for fruit. However, with this method, CO₂ is removed from the storage space with the aid of an adsorbent in order to effect a longer storage life of the fruit.

Preferably, the CO₂ is released from the solid substance when photosynthesis takes place within the enclosed space. Generally, this will be during the day or in the evening when assimilation lighting is used.

Preferably, the enclosed space is a greenhouse, as used, for instance, in horticulture under glass.

The CO₂ which is stored on the solid substance can be produced by a heating boiler which heats the enclosed space during periods when there is a heat demand in this space, or it can originate from a different source. As a rule, this will take place in the evening or night. Such a different source can, for instance, be a heating boiler located on a different location on the farm premises, or a CO₂ source belonging to another farm. In these last two cases, it will be clear that the solid substance will have to be present in a separate unit which can be transported. In such cases, CO₂ is stored on the solid substance outside of the enclosed space, for instance by guiding gases over the solid substance, whereupon the separate unit is brought inside the space whose CO₂ concentration needs to be regulated, which takes place when the solid substance releases the stored CO₂. This latter is preferably effected by guiding fresh air over the solid substance so that the CO₂ is released or the stored CO₂ is stripped from the solid substance. In other words, CO₂ which is produced during periods when there is a heat demand within the enclosed space, and when no photosynthesis takes place, is stored on a solid substance, whereupon, at a later moment in time and when photosynthesis takes place again, the stored CO₂ is released to the air within the enclosed space.

Preferably, the combustion process that produces the CO₂ is carried out within the enclosed space itself or in a space located nearby, for instance an adjoining space. As a rule, it takes place by means of a heating boiler which heats the space during periods of time when there is a heat demand within the enclosed space.

In a suitable embodiment of the method according to the invention, both the heating boiler and the solid substance are present in the enclosed space. In a still more suitable embodiment, the solid substance is present in the enclosed space while the heating boiler is in the space nearby, for instance an adjoining space. In the latter case, a larger quantity of crops can be grown in the enclosed space. It will be clear that the CO₂ produced is guided via a pipe or other connecting part of the heating boiler to the solid substance and/or the enclosed space. As a rule, a bed of solid substance will be involved, located in a fixed or separate unit. In a suitable embodiment of the method according to the invention, the heating boiler and a bed of the solid substance are coupled to each other. In this manner, the flue gas of the heating boiler can be guided directly over the solid substance whereby CO₂ is stored in the bed. In a suitable embodiment of the method according to the invention, a bed of the solid substance is coupled to the CO₂-distribution network within the enclosed space. As a rule, such a CO₂-distribution network consists of a structure of perforated hoses arranged in the vicinity of the crops, for instance below the crop and on the ground.

An additional advantage is that the flue gas can also be cleaned by means of the solid substance whereby gas components such as, for instance, ethene, carbon monoxide and nitrogen oxide can be separated from the CO₂. This is of importance in particular when the combustion process is carried out by means of gas engines.

In the heat buffer, generated heat is stored which can be used at a later moment in time. This is, for instance, the case when the heating boiler functions for the benefit of CO₂ production while at that moment there is no heat demand within the space. Stored heat can then be released from the heat buffer at a later moment in time, during periods when there is a heat demand within the enclosed space. In this manner, a heat buffer can be used to prevent incidental peaks in gas consumption, which can be particularly cost-reducing.

According to the present invention, the regulation of the CO₂ concentration is coupled to a heat buffer which regulates the temperature within the enclosed space. Such an embodiment is particularly efficient. During the day, when heat is generated for CO₂ production, but when there is hardly any or no heat demand, the heat buffer will be heated. When the heat buffer is coupled to a bed of the solid substance, the solid substance will be heated simultaneously, so that the CO₂ uptake capacity of the solid substance will decrease, so that CO₂ can be released relatively easily. Conversely, during the evening and night, the heat buffer will release a part of its heat and, hence, cool down. If the bed of the solid substance is coupled to the heat buffer, the solid substance will simultaneously cool down so that the CO₂ uptake capacity of the solid substance will increase and CO₂ will be stored on the solid substance. Therefore, in a suitable embodiment of the method according to the invention, a heat buffer and the solid substance, for instance in the form of a bed, are coupled to each other.

Preferably, in the enclosed space, a heating boiler, heat buffer and the solid substance are present and are coupled to each other.

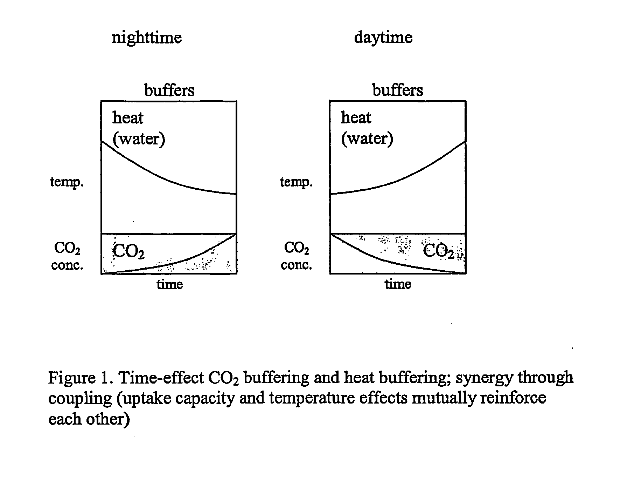

By coupling the heat buffer to the regulation of the CO₂ concentration, the action of the solid substance is improved and the dosing of the CO₂ can be uncoupled from the heat demand in an attractive manner. In this connection, reference is made to Fig. 1 in which the energetic effect of the coupling of the regulation of the CO₂ concentration and the heat buffer is clearly shown, since the CO₂ uptake capacity and the temperature effect mutually reinforce each other. The fact is that the heat buffer will be heated during the day when there is less demand for heat. When the solid substance is heated simultaneously, the CO₂ uptake capacity will decrease so that the CO₂ is released relatively easily. However, during the night, the heat buffer will release its heat to the enclosed space and cool down. When, simultaneously, the solid substance cools down, then, the CO₂ uptake capacity will increase. All this is particularly important because there is a tendency to increase the volume of heat buffers due to the increasing demand of CO₂ in greenhouses. The presently proposed coupling of the regulation of the CO₂ concentration to the heat buffer renders the necessity of larger heat buffers superfluous and makes the regulation of CO₂ as well as the heat more efficient. Further, also, the pattern of consumption of energy can be leveled off.

As a rule, the dimensions of a bed of the solid substance will be smaller than the dimensions of a heat buffer which, generally, is designed in the shape of storage tanks. In order to effect as much synergy as possible as a result of the coupling, very suitably, a combined buffer can be used in which the bed with the solid substance is provided around the heat buffer as a gastight casing. Preferably, this casing is in direct contact with the heat buffer. In such an embodiment, the bed with the solids substance will be provided as a double outside wall around the heat buffer tank. Such an embodiment increases the efficiency of the heat buffer because of the occurring insulating effect. With existing heat buffers, the solid substance can be provided around the heat buffer in a gastight cover.

In a special embodiment, the present invention is used within an enclosed space which floats on a water surface, for instance a floating greenhouse. In that case, the solid substance and the CO₂ stored thereon can be used as a floating body for the enclosed space.

It will be clear to the skilled person that a space within which crops are grown is enclosed in the sense that an air of a particular composition and temperature is maintained. However, this entails that the air within the enclosed space is to be regularly or continuously ventilated, which can be effected in known manners.

In the method according to the invention, the ratio of the amount of ventilated air and the amount of air which is guided over the solid substance depends on plant conditions, relatively humidity, temperature, air speed, location of the enclosed space *et cetera.* As a rule, a climate computer determines to what extent the ventilating windows have to be opened. The solid substance used in the method according to the invention is an adsorbent which can adsorb and release CO₂. Suitable solid substances can be selected from the group of activated carbons, zeolites or carbonates. As a rule, such solid substances have a porosity of 30 - 80% and an average pore diameter of 8 - 8000 nm. Preferably, the solid substance comprises an activated carbon and/or a zeolites, more preferably the solid substance comprises an activated carbon. The bed of solid substance can comprise two or more suitable solid substances which store and release CO₂. As a rule, the bed of solid substance will consist of one particular solid substance. The crops that are grown within the enclosed space whose CO₂ concentration is regulated can be flowers, potted plants, vegetables and fruit. In particular, the method is especially suitable for various vegetables, in particular bell peppers and tomatoes.

## Claims

1. A method for regulating the CO₂ concentration of the air in an enclosed space within which crops are grown, wherein CO₂, released in a combustion process, is stored and released at a later moment in time in order to effect a desired CO₂ concentration within the space, **characterized in that** the CO₂ is stored on a solid substance and the regulation of the CO₂ concentration is coupled to a heat buffer regulating the temperature within the enclosed space.

2. A method according to claim 1, wherein the CO₂ is released from the solid substance when photosynthesis takes place in the enclosed space.

3. A method according to claim 1 or 2, wherein the enclosed space is a greenhouse.

4. A method according to any one of claims 1 - 3, wherein the CO₂ is released or stripped from the solid substance by guiding fresh air over the solid substance.

5. A method according to any one of claims 1 - 4, wherein the combustion process is carried out in order to heat the air within the enclosed space.

6. A method according to any one of claims 1 - 5, wherein the combustion process is carried out with a heating boiler, and the solid substance is present in the enclosed space and the heating boiler is present in the enclosed space or in an adjoining space.

7. A method according to any one of claims 1 - 6, wherein the heat buffer and a bed with the solid substance are in the enclosed space and the heating boiler is in the enclosed space or in an adjoining space, and the heat buffer, the bed with the solid substance and the heating boiler are coupled to each other.

8. A method according to any one of claims 1 - 7, wherein the solid substance has a porosity of 30 - 80%, and an average pore diameter of 8 - 8000 nm.

9. A method according to any one of claims 1 - 8, wherein the solid substance comprises activated carbon and/or a zeolite.

10. A method according to claim 9, wherein the solid substance comprises an activated carbon.

11. A method according to any one of claims 1 - 10, wherein a bed with the solid substance is provided around the heat buffer in the form of a gastight casing.

12. A method according to any one of claims 1 - 10, wherein the enclosed space floats on a water surface and the solid substance and the CO₂ stored thereon are used as a floating body for the enclosed space.

## Patentansprüche

1. Verfahren zur Regelung der CO₂-Konzentration der Luft in einem umschlossenen Raum, in dem Pflanzen angebaut werden, bei dem in einem Verbrennungsverfahren freigesetztes CO₂ gelagert und zu einem späteren Zeitpunkt freigesetzt wird, um eine gewünschte CO₂-Konzentration in dem Raum zu bewirken, **dadurch gekennzeichnet, dass** das CO₂ auf einer festen Substanz gelagert wird und die Regelung der CO₂-Konzentration mit einem Wärmepuffer gekoppelt ist, der die Temperatur in dem umschlossenen Raum regelt.

2. Verfahren nach Anspruch 1, bei dem das CO₂ von der festen Substanz freigesetzt wird, wenn Photosynthese in dem umschlossenen Raum stattfindet.

3. Verfahren nach Anspruch 1 oder 2, bei dem der umschlossene Raum ein Treibhaus ist.

4. Verfahren nach einem der Ansprüche 1 bis 3, bei dem das CO₂ von der festen Substanz freigesetzt oder gestrippt wird, indem frische Luft über die feste Substanz geführt wird.

5. Verfahren nach einem der Ansprüche 1 bis 4, bei dem das Verbrennungsverfahren durchgeführt wird, um die Luft in dem umschlossenen Raum zu erwärmen.

6. Verfahren nach einem der Ansprüche 1 bis 5, bei dem das Verbrennungsverfahren mit einem Heizkessel durchgeführt wird und die feste Substanz in dem umschlossenen Raum vorhanden ist und der Heizkessel in dem umschlossenen Raum oder einem benachbarten Raum vorhanden ist.

7. Verfahren nach einem der Ansprüche 1 bis 6, bei dem der Wärmepuffer und ein Bett mit der festen Substanz in dem umschlossenen Raum sind und der Heizkessel in dem umschlossenen Raum oder einem benachbarten Raum ist und der Wärmepuffer, das Bett mit der festen Substanz und der Heizkessel miteinander gekoppelt sind.

8. Verfahren nach einem der Ansprüche 1 bis 7, bei dem die feste Substanz eine Porosität von 30 bis 80 % und einen durchschnittlichen Porendurchmesser von 8 bis 8000 nm besitzt.

9. Verfahren nach einem der Ansprüche 1 bis 8, bei dem die feste Substanz Aktivkohle und/oder Zeolith umfasst.

10. Verfahren nach Anspruch 9, bei dem die feste Substanz Aktivkohle umfasst.

11. Verfahren nach einem der Ansprüche 1 bis 10, bei dem ein Bett mit der festen Substanz in Form eines gasdichten Behältnisses um den Wärmepuffer bereitgestellt ist.

12. Verfahren nach einem der Ansprüche 1 bis 10, bei dem der umschlossene Raum auf einer Wasseroberfläche schwimmt und die feste Substanz und das darauf gelagerte CO₂ als Schwimmkörper für den umschlossenen Raum verwendet werden.

## Revendications

1. Procédé pour réguler la concentration en CO₂ de l'air dans un espace fermé à l'intérieur duquel on fait pousser des cultures, dans lequel CO₂ libéré lors d'un processus de combustion, est stocké et libéré à un moment ultérieur dans le temps afin d'établir une concentration en CO₂ voulue à l'intérieur de l'espace, **caractérisé en ce que** le CO₂ est stocké sur une substance solide et la régulation de la concentration en CO₂ est couplée à un tampon de chaleur régulant la température à l'intérieur de l'espace fermé.

2. Procédé selon la revendication 1, dans lequel le CO₂ est libéré depuis la substance solide lorsqu'une photosynthèse a lieu dans l'espace fermé.

3. Procédé selon la revendication 1 ou 2, dans lequel l'espace fermé est une serre.

4. Procédé selon l'une quelconque des revendications 1 à 3, dans lequel le CO₂ est libéré ou séparé de la substance solide en guidant de l'air frais sur la substance solide.

5. Procédé selon l'une quelconque des revendications 1 à 4, dans lequel le processus de combustion est effectué afin de chauffer l'air à l'intérieur de l'espace fermé.

6. Procédé selon l'une quelconque des revendications 1 à 5, dans lequel le processus de combustion est effectué à l'aide d'une chaudière de chauffage, et la substance solide est présente dans l'espace fermé et la chaudière de chauffage est présente dans l'espace fermé ou dans un espace contigu.

7. Procédé selon l'une quelconque des revendications 1 à 6, dans lequel le tampon de chaleur et un lit avec la substance solide se trouvent dans l'espace fermé et la chaudière de chauffage se trouve dans l'espace fermé ou dans un espace contigu, et le tampon de chauffage, le lit avec la substance solide et la chaudière de chauffage sont couplés les uns aux autres.

8. Procédé selon l'une quelconque des revendications 1 à 7, dans lequel la substance solide a une porosité de 30 à 80 %, et un diamètre moyen de pores de 8 à 8000 nm.

9. Procédé selon l'une quelconque des revendications 1 à 8, dans lequel la substance solide comporte du charbon actif et/ou une zéolite.

10. Procédé selon la revendication 9, dans lequel la substance solide comporte du charbon actif.

11. Procédé selon l'une quelconque des revendications 1 à 10, dans lequel un lit avec la substance solide est agencé autour du tampon de chauffage sous la forme d'une enveloppe étanche aux gaz.

12. Procédé selon l'une quelconque des revendications 1 à 10, dans lequel l'espace fermé flotte sur une surface d'eau et la substance solide et le CO₂ stocké dessus sont utilisés comme un corps flottant pour l'espace fermé.
